Europäisches Patentamt

European Patent Office

Office européen des brevets

(19)

(11) Publication number: **0 210 533**
**A1**

## (12) EUROPEAN PATENT APPLICATION

(21) Application number: **86109690.7**

(22) Date of filing: **28.06.83**

(51) Int. Cl.⁴: **A 01 N 43/78**
//(A01N43/78, 43:40)

(30) Priority: **13.07.82 GB 8220301**

(43) Date of publication of application:
**04.02.87 Bulletin 87/6**

(84) Designated Contracting States:
**AT BE CH DE FR GB IT LI LU NL SE**

⅞¼ Publication number of the earlier application
in accordance with Art. 76 EPC: **0 101 168**

(71) Applicant: **FBC LIMITED**
**Hauxton**
**Cambridge CB2 5HU(GB)**

(72) Inventor. **Mayes, Anthony Joseph**
**61 High Street**
**Little Shelford Cambridge(GB)**

(72) Inventor: **Rea, Bryan Leslie**
**61 Dovecote Lane**
**Beeston Nottingham(GB)**

(74) Representative: **Waldman, Ralph David et al,**
**Schering Agrochemicals Limited Industrial Property**
**Department Chesterford Park Research Station**
**Saffron Walden Essex CB10 1XL(GB)**

(54) Herbicidal mixtures.

(57) The herbicidal action of benazolin is improved by the addition of haloxyfop.

EP 0 210 533 A1

Case 82/20299-Div 1

HERBICIDAL MIXTURES

This invention relates to herbicidal compositions and to a method of selectively controlling weeds in crops.

The present invention provides a herbicidal composition comprising:

a) benazolin and

b) haloxyfop

Benazolin is the common name for the herbicide having the chemical name 4-chloro-2-oxobenzothiazolin-3-ylacetic acid. In this specification this name is used to include benazolin as the free acid or one of its salt, e.g. potassium salt or ester e.g. ethyl ester derivatives, acceptable in herbicidal applications. Generally the benazolin is present as the ethyl ester. It has been found that unexpected advantages may be obtained by using component (a) in conjunction with component (b).

The invention also provides a method of controlling weeds which comprises applying to the weeds or their locus, components (a) and (b), either together or in sequence.

The invention is generally applicable in controlling weeds in a variety of growing crops, such as peanuts soybeans, cotton and oilseed rape.

Haloxyfop is the common name for 2-[4-(3-chloro-5-(trifluoromethyl)-2-pyridinyl)oxy)phenoxy]propionic acid and that name is used to include salts and esters e.g. the methyl ester, acceptable in herbicidal applications.

The weight ratio of component (a) to component (b) can vary over a wide range. Suitable ratio ranges of (a) to (b) are 10:1-1:5, preferably 5:1-1:1. Suitable rates of application of (b) are 25-1000, preferably 25-500 g/hectare.

A wide variety of weeds may be controlled by the mixtures of the invention. Examples include mayweeds (Matricaria spp.), red dead-nettle (Lamium purpureum) chickweed (Stellaria media), knotgrass (Polygonum aviculare), speedwells (Veronica spp.), cleavers (Galium aparine), pigweeds (Amaranthus spp.), fat-hen (Chenopodium album), black nightshade (Solanum nigrum), wild oats (Avena fatua), cocklebur (Xanthium spp.), jimsonweed (Datura stramonium), morning glory (Ipomoea spp.), sicklepod (Cassia obtusifolia) and prickly sida (Sida spinosa).

If desired the compositions may include other suitable herbicides e.g. to broaden the spectrum.

The mixture of active herbicides can be applied by conventional manner for herbicides and usually by, a spray treatment.

In addition to tank mixing immediately prior to use the compositions containing (a) and (b) may be formulated into more concentrated primary compositions which are usually diluted with water just before use. Such compositions usually comprise one or more surface active agents. Examples of such compositions are as follows.

It can be a dispersible solution which comprises the active ingredients dissolved in a water-miscible solvent with the addition of a dispersing agent. Alternatively it can comprise the ingredients in the form of a finely ground powder in association with a dispersing agent and intimately mixed with water to give a paste or cream which can if desired be added to an emulsion of oil in water to give a dispersion of active ingredients in an aqueous oil emulsion.

An emulsifiable concentrate comprises the active ingredient dissolved in a water-immiscible solvent which is formed into an emulsion with water in the presence of an emulsifying agent.

A granular solid comprises the active ingredients associated with powder diluents such as kaolin, which mixture is granulated by known methods. Alternatively it comprises the active ingredients adsorbed or adsorbed on a pre-granular diluent, for example Fuller's earth, attapulgite or limestone grit.

A dispersible or wettable powder usually comprises the active ingredients in admixture with a suitable surfactant and an inert powder diluent such as china clay.

Another suitable concentrate is a flowable suspension concentrate which is formed by grinding the active ingredients with water, a wetting agent and a suspending agent.

It is generally desirable that both components are in the same chemical form, i.e. both are esters, or both are salts. In some circumstances it may be desirable to combine an ester with a salt, or even a free acid with a salt or ester.

In some circumstances it may be desirable to combine two types of formulation e.g. one of the components is present in an emulsifiable concentrate and the second component is dispersed as a powder in this concentrate.

The above herbicidal formulations are to be regarded as part of the invention. The total concentration of the active components in a composition for direct application to the crop by conventional ground methods is preferably within the range of 0.02 to 1 per cent by weight, of the composition, but more concentrated compositions containing, for example up to 20 per cent may be desirable.

In a primary composition the total amount of active compound can vary widely, for example, from 5 to 95 per cent by weight.

The invention is illustrated in the following example.

Example

Aqueous suspensions of benazolin ethyl ester (BE), haloxyfop (methyl ester) (HP) and mixtures of the two were sprayed at various concentrations and ratios on various weeds in pots in a glasshouse. After a given time control of the weeds was assesssed. Synergism was exhibited as follows.

a) Cleavers (Galium aparine).

Assessment - 24 days after spraying

| Treatment | Rate | % control | |
| --- | --- | --- | --- |
| | g/ha | Observed | Expected |
| BE | 150 | 75 | |
| HP | 31.25 | 0 | |
| | 62.5 | 0 | |
| | 125 | 0 | |
| BE+HP | 150+31.25 | 80 | 75 |
| | 150+62.5 | 80 | 75 |
| | 150+125 | 85 | 75 |

b)  Wild Oats (Avena fatua).

Assessment - 24 days after spraying

| Treatment | Rate | % control | |
|---|---|---|---|
| | g/ha | Observed | Expected |
| BE | 300 | 15 | |
| HP | 31.25 | 0 | |
| BE+HP | 300+31.25 | 50 | 15 |

## Claims

1) A herbicidal composition comprising

a) benazolin and

b) haloxyfop.


2) A composition according to claim 1 in which the benazolin is in the form of its ethyl ester.


3) A method of controlling weeds which comprises applying to the weeds or their locus,

a) benazolin and

b) haloxyfop.


4) A method according to claim 3 in which the benazolin is in the form of its ethyl ester.

ID 0931I

## EUROPEAN SEARCH REPORT

European Patent Office

### DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| E | EP-A-0 110 236 (HOECHST)<br>* Claims * | 1-4 | A 01 N 43/78 //<br>(A 01 N 43/78<br>A 01 N 43:40 ) |
| X,Y | RESEARCH DISCLOSURE, no. 219, July 1982, page 253, abstract no. 21937, Havant, Hampshire, GB; "Herbicidal mixtures"<br>* Benazolin and b * | 1-4 | |
| Y | EP-A-0 004 414 (ICI)<br>* Claim 1 * | 1-4 | |

TECHNICAL FIELDS
SEARCHED (Int Cl 4)

A 01 N

The present search report has been drawn up for all claims

| Place of search | Date of completion of the search | Examiner |
|---|---|---|
| THE HAGUE | 14-11-1986 | DECORTE D. |